# EUROPÄISCHE PATENTSCHRIFT

(11) **EP 1 228 984 B1**
(45) Veröffentlichungstag und Bekanntmachung des Hinweises auf die Patenterteilung: **18.06.2003**
(21) Anmeldenummer: 02001563.2
(22) Anmeldetag: 23.01.2002
(51) Int. Cl.: B65G 17/12

(54) **Vertikalumlaufförderer**
Endless vertical conveyor
Transporteur vertical sans fin

(30) Priorität: 26.01.2001 DE 10103720
(43) Veröffentlichungstag der Anmeldung: 07.08.2002
(73) Patentinhaber: NERAK GMBH FÖRDERTECHNIK, 29313 Hambühren (DE)
(72) Erfinder: Dettmer, Claus, 29313 Hambühren (DE); Handrack, Bernd, 77654 Offenburg (DE)
(74) Vertreter: Patentanwälte Thömen & Körner

(56) Entgegenhaltungen:
- WO-A-91/17102
- DE-A- 4 238 341
- US-A- 1 250 125
- US-A- 5 101 963
- US-A- 5 207 314
- PATENT ABSTRACTS OF JAPAN vol. 007, no. 269 (M-259), 30. November 1983 (1983-11-30) & JP 58 148103 A (HITACHI KINZOKU KK), 3. September 1983 (1983-09-03)
- PATENT ABSTRACTS OF JAPAN vol. 016, no. 206 (M-1248), 15. Mai 1992 (1992-05-15) -& JP 04 032415 A (TSUBAKIMOTO CHAIN CO), 4. Februar 1992 (1992-02-04)

## Beschreibung

Die Erfindung betrifft einen Umlaufförderer nach dem Oberbegriff des Anspruchs 1.

In Restaurants und Kantinen werden zum Transport von Tabletts mit Lebensmitteln und Getränken oder Geschirr Fördervorrichtungen eingesetzt.

Bei einem Vertikalförderer mit einem endlosen Zugmittel besteht das Problem, dass das Zugmittel auf einer Seite aufwärts und auf der anderen Seite abwärts läuft und über entsprechende Rollen dann eine Umlenkung von der Aufwärts- und Abwärtsbewegung erfährt. Wenn eine als Lastenträger dienende Traggabel nun an dem Zugmittel befestigt wird, muss dafür gesorgt werden, dass sie stets eine waagerechte Ausrichtung besitzt, gleichgültig ob das Zugmittel sich in der Aufwärtsbewegung, der Umlenkbewegung oder der Abwärtsbewegung befindet.

Bisherige Lösungen mit beispielsweise Kulissensteinen haben sich als nachteilig erwiesen, da die Traggabel beim Übergang von der vertikalen Bewegung in die Umlenkbewegung häufig Erschütterungen unterworfen wird und dadurch eine Beschädigungsgefahr für das Transportgut besteht.

Aus der gattungsbildenden US 1,250,125 A ist ein Vertikalförderer mit zwei Ketten als Zugmittel bekannt, bei dem ein Lastenträger mit beiden Ketten gekoppelt ist und durch den seitlichen Versatz der Ketten stets waagerecht ausgerichtet- ist. Der Lastenträger ist hier ausschließlich in den Kettengliedern gelagert.

Bei einem weiteren Vertikalförderer, wie er aus der US-5,101,963 A bekannt ist, ist eine Traggabel mit zwei Ketten gekoppelt, die in vertikalen parallelen Ebenen ohne Versatz hintereinander angeordnet sind. Die Traggabeln sind mit Rollen ausgestattet und in Führungsschienen gelagert.

Einen ähnlichen Vertikalfärderer zeigt auch die WO 91/17102 A1, bei dem jedoch statt Ketten Zahnriemen verwendet werden.

Der Erfindung liegt die Aufgabe zugrunde, einen Umlaufförderer zu schaffen, welcher eine Zwangsausrichtung der Traggabel gewährleistet und auch bei Umlenkbewegungen ruckfrei arbeitet.

Diese Aufgabe wird bei einem Umlaufförderer nach dem Oberbegriff des Anspruchs 1 durch die im kennzeichnenden Teil angegebenen Merkmale gelöst.

Bei der erfindungsgemäßen Lösung besteht der Grundgedanke darin, zwei auf gleichem Höhenniveau hintereinander angeordnete umlaufende Zugmittel vorzusehen, die seitlich versetzt sind. Durch den synchronen Umlauf hat jedes Glied des ersten Zugmittels ein entsprechendes Partnerglied des zweiten Zugmittels ebenfalls auf gleichem Höhenniveau. Die Höhenniveaus der jeweils komplementären Glieder stimmen in jeder Phase des Umlaufs der Zugmittel überein. Es ist dadurch möglich, durch Abstützung in beiden komplementären Gliedern eine waagerechte Position aufrechtzuerhalten und damit eine Traggabel entsprechend waagerecht zu führen.

Zusätzlich sind die Achsen der Traggabeln in Gabelwagen gelagert, die in einer umlaufenden, vor dem ersten Zugmittel angeordneten Führungsschiene gleiten. Dabei entspricht der Bahnverlauf der Führungsschiene dem Bahnverlauf des ersten Zugmittels.

Durch die Abstützung der Traggabeln in Gabelwagen wird das durch die Lasten ausgeübte Biegemoment von den Gabelwagen übernommen und nicht vom Zugmittel. Auf das Zugmittel wirken dann nur noch vertikale Kräfte.

Vorzugsweise sind die Zugmittel als Gummiblockriemen ausgebildet, bei dem ein Zugträger auf der über die Antriebsräder laufenden Seite eine Antriebsverzahnung und auf der gegenüber liegenden Seite als Gummiblöcke ausgebildete Glieder zur Aufnahme und Lagerung der Achsen und Zapfen der Traggabeln aufweist.

Durch die Antriebsverzahnung wird eine formschlüssige Kopplung zwischen dem Zugmittel und den Antriebsrädern erreicht und durch Koppelung der Antriebsräder für die beiden Zugmittel auch ein Synchronlauf der Zugmittel untereinander. Die auf der gegenüber liegenden Seite der Antriebsverzahnung angeordneten Gummiblöcke nehmen die Achsen und Zapfen der Traggabeln elastisch auf und dämpfen so Bewegungsänderungen beim Starten und Stoppen des Umlaufs der Zugmittel. Ferner erhalten die Achsen und Zapfen der Traggabeln einen radialen Abstand zu den Antriebsrädern, so dass keine Berührungen und damit kein Verschleiß mit diesen Teilen entstehen kann.

Statt eines Riemens kann auch eine Kette verwendet werden. Diese Kette wird aus korrosionsbeständigem Stahl hergestellt, damit beim bevorzugten Einsatzgebiet in Küchen und Kantinen die tägliche Reinigung ohne Korrosionsgefahr durchgeführt werden kann.

Gemäß einer Weiterbildung ist vorgesehen, dass die Antriebsräder eine Rollenverzahnung aufweisen.

Durch die Rollenverzahnung wird der Gleichlauf der beiden Gummiketten erreicht.

Vorzugsweise sind zur Umlenkung der Zugmittel dort, wo sie nicht angetrieben werden, Umlenkräder vorhanden, wobei jedes Zugmittel über zwei seitlich beabstandete Antriebräder und zwei seitlich beabstandete Umlenkräder läuft.

Dadurch wird der Abstand zwischen den aufwärts und abwärts laufenden Traggabeln nicht allein vom Durchmesser der Antriebräder und Umlenkräder bestimmt, sondern zusätzlich von deren Achsabstand. Die Bauhöhe des Umlaufförderers kann so bei vorgegebenem Abstand zwischen den aufwärts und abwärts laufenden Traggabeln und vorgegebener Hubhöhe verringert werden.

Ein Ausführungsbeispiel der Erfindung ist in der Zeichnung dargestellt.

In der Zeichnung zeigen:
- Fig. 1a: einen oberen Teil eines Längsschnittes durch eine vertikale Schnittebene des Umlauf förderers,
- Fig. 1b: einen unteren Teil eines Längsschnittes durch eine vertikale Schnittebene des Umlaufförderers,
- Fig. 2: einen Querschnitt durch eine horizontale Schnittebene,
- Fig. 3: ein Detailschnitt der Verzahnung der Antriebsräder und
- Fig. 4: eine Detailansicht eines Gabelwagens.

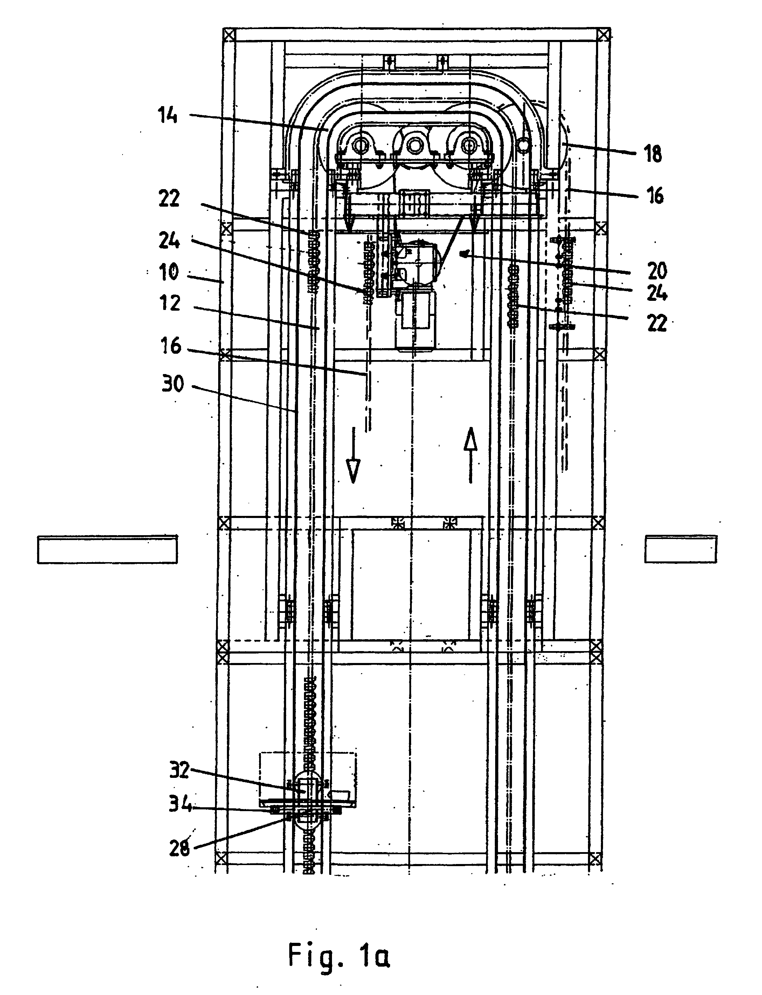

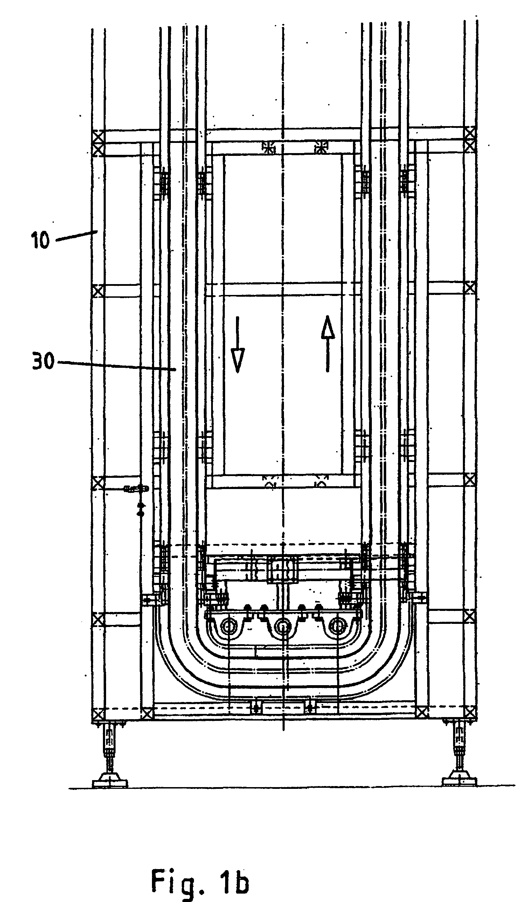

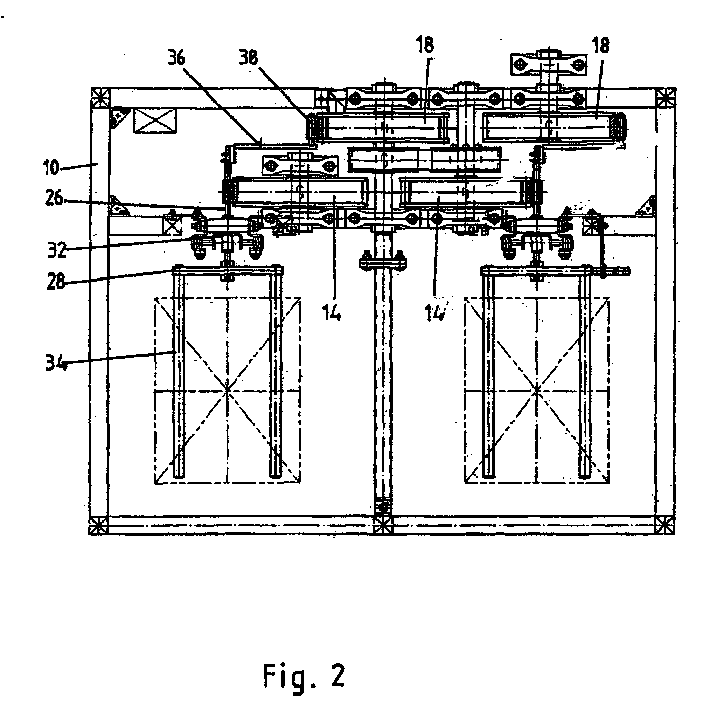

Der Umlaufförderer gemäß Fig. 1 und 2 umfasst einen Gestellrahmen 10, in dem für das eine Zugmittel 12 zwei obere Antriebsräder 14 und zwei untere Umlenkräder 14 und für das andere Zugmittel 16 ebenfalls zwei obere Antriebsräder 18 und zwei untere Umlenkräder 18 gelagert sind. Die Antriebsräder 14, 18 werden über einen Antrieb 20 aus einem Motor und einem Getriebe synchron angetrieben und tragen Zugmittel 12, 16 in Form von Gummiblockriemen aus Zugträgern mit einer Antriebsverzahnung auf der nach innen weisenden Seite und aus Gummiblöcken gebildeten Gliedern 22, 24 auf der nach außen weisenden Seite. Achsen 26 von Traggabeln 28 sind in Drehlagern der Glieder 22 gelagert und durchgreifen diese.

An den die Glieder 22 des ersten Zugmittels 12 durchgreifenden Enden der Achsen 26 sind waagerechte Hebel 36 drehfest angebracht, die jeweils mit einem Zapfen 38 in die komplementären Glieder 24 des anderen Zugmittels 16 hineinragen und dort in einem Drehlager gelagert sind. Die komplementären Glieder 22, 24 der beiden Zugmittel 12, 16 sind in jeder möglichen Position exakt waagerecht zueinander ausgerichtet.

Vor dem ersten Zugmittel 12 ist eine Führungsschiene 30 angeordnet, deren Bahnverlauf mit dem des ersten Zugmittels 12 übereinstimmt. In der Führungsschiene 30 gleiten auf Rollen gelagerte Gabelwagen 32, die ebenfalls.die Achsen 26 der Traggabeln 28 in Drehlagern aufnehmen.

Die Traggabeln 28 selbst sind starr mit den die Gabelwagen 32 und die Glieder 22 des ersten Zugmittels 12 durchgreifenden Achsen 26 verbunden und haben eine Ablagefläche aus zwei oder mehr Gabelzinken 34, auf der Tabletts mit Speisen, Getränken oder Geschirr abgestellt werden können.

Aus dem Querschnitt der Zeichnung geht die seitlich versetzte Anordnung der beiden Zugmittel 12, 16 hervor. Dabei sind die Antriebsräder 14 und Umlenkräder 14 jeweils so weit auseinander gelagert, dass die Achsen der komplementären Antriebsräder 14 und Umlenkräder 18 gerade durch den Zwischenraum hindurchpassen.

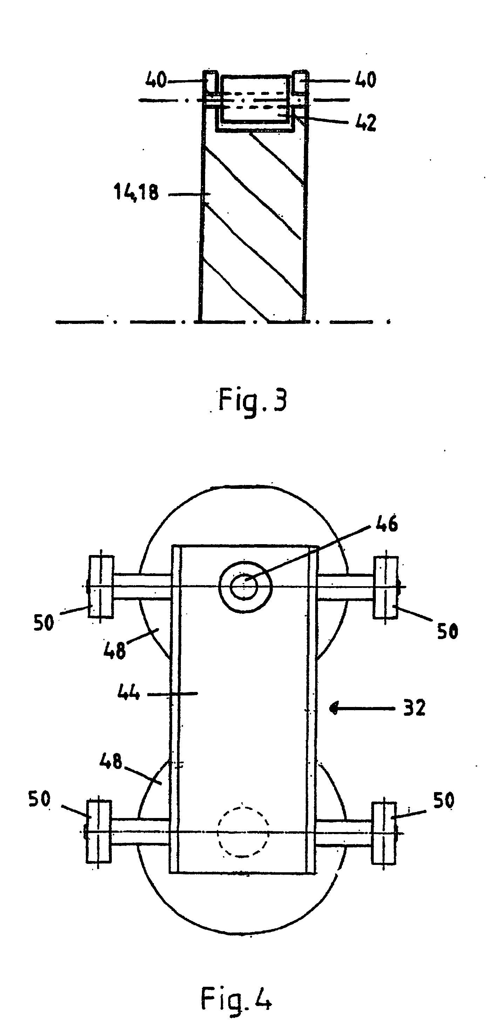

Fig. 3 zeigt ein Detail der Antriebsräder 14, 18. Dort sind innerhalb seitlicher Flansche 40 Rollen 42 gelagert, die als Verzahnung der Antriebsräder 14, 18 dienen. Die Rollen 42 ermöglichen einen reibungsfreien Ein- und Ausgriff der entsprechenden Antriebsverzahnung der Zugmittel 12, 16. Die seitlichen Flansche 40 bilden gleichzeitig eine Seitenführung der Zugmittel 12, 16.

Fig. 4 zeigt ein Detail eines Gabelwagens 32. Dieser umfasst einen Fahrrahmen 44 mit einem Drehlager 46 für eine Achse 26 einer Traggabel 28, zwei gelagerte Rollen 48 für eine Seitenführung in der Schnittebene nach Fig. 1 und zwei Achsen mit Rollenpaaren 50 für eine Seitenführung in der Schnittebene nach Fig. 2.

Im Einsatz kann der Umlaufförderer getaktet oder kontinuierlich betrieben werden. Bei kontinuierlichem Betrieb werden die Lasten, also z. B. Tabletts mit Geschirr jeweils seitlich über eine erste Rollenförderbahn getaktet zugeführt und über eine zweite Rollenförderbahn getaktet abgeführt. Die Rollenförderbahnen erstrecken sich bis in den Bereich der Traggabeln 28, wobei jedoch Zwischenräume zum Passieren der Gabelzinken 34 verbleiben. Die Gabelzinken 34 heben beim Passieren der ersten Rollenförderbahn ein vorhandenes Tablett an und fördern es entlang der durch die ersten Zugmittel 12 und die Führungsschiene 30 vorgegebenen Umlaufbahn zur zweiten Rollenförderbahn. Dort wird es abgesetzt und anschließend abtransportiert.

Etwas komplizierter ist der Vorgang, wenn eine Last nicht durch eine Aufwärtsbewegung, sondern durch eine Abwärtsbewegung der Traggabeln 28 aufgenommen werden soll. In diesem Fall muss die in den Bereich der Traggabeln 28 hinein ragende Rollenförderbahn entfernt, z. B. ausgeschwenkt, werden, bevor das horizontal eingeförderte Tablett auf den Gabelzinken 34 liegend abwärts gefördert werden kann. Ist die folgende, leere Traggabel 28 in Aufnahmeposition, muss die Rollenförderbahn wieder hochgeschwenkt werden.

### Bezugszeichenliste:

- 10: Gestellrahmen
- 12: Zugmittel
- 14: Antriebsräder, Umlenkräder
- 16: Zugmittel
- 18: Antriebsräder, Umlenkräder
- 20: Antrieb
- 22: Glieder
- 24: Glieder
- 26: Achse
- 28: Traggabel
- 30: Führungsschiene
- 32: Gabelwagen
- 34: Gabelzinken
- 36: Hebel
- 38: Zapfen
- 40: Flansch
- 42: Rolle
- 44: Fahrrahmen
- 46: Drehlager
- 48: Rollen
- 50: Rollenpaar

## Patentansprüche

1. Umlaufförderer mit einem ersten in Hauptrichtung vertikal über obere und untere Antriebsräder (14) und Umlenkräder (14) laufenden formschlüssigen Zugmittel (12), insbesondere Kette oder Zahnriemen, wobei einzelne Glieder (22) des Zugmittels (12) mit Traggabeln (28) für Lasten gekoppelt sind, wobei ein zweites umlaufendes formschlüssiges Zugmittel (16) hinter dem ersten Zugmittel (12) auf gleichen Höhenniveau wie das erste Zugmittel (12) aber seitlich zum ersten Zugmittel (12) versetzt angeordnet ist, dass die Traggabeln (28) über Achsen (26) in Gliedern (22) des ersten Zugmittels (12) drehbeweglich gelagert sind, die Achsen (26) diese Glieder (22) durchgreifen und mittels eines waagerechten Hebels (36) und eines Zapfens (38) auch in Gliedern (24) des zweiten Zugmittels (16) gelagert sind und dass beide Zugmittel (12, 16) synchron umlaufen **dadurch gekennzeichnet, dass** die Achsen (26) der Traggabeln (28) zusätzlich in Gabelwagen (32) gelagert sind, die in einer umlaufenden, vor dem ersten Zugmittel (12) angeordneten Führungsschiene (30) gleiten, wobei der Bahnverlauf der Führungsschiene (30) dem Bahnverlauf des ersten Zugmittels (12) entspricht.

2. Umlauf förderer nach Anspruch 1, **dadurch gekennzeichnet, dass** die Zugmittel (12, 14) als Gummiblockriemen ausgebildet sind, bei dem ein Zugträger auf der über die Antriebsräder (14, 18) laufenden Seite eine Antriebsverzahnung und auf der gegenüberliegenden Seite Glieder (22; 24) zur Aufnahme der Achsen (26) und Zapfen (38) der Traggabeln (28) aufweist.

3. Umlauf förderer nach Anspruch 1, **dadurch gekennzeichnet, dass** die Zugmittel (12, 16) als Kette aus einem korrosionsbeständigen Stahl bestehen.

4. Umlaufförderer nach einem der Ansprüche 1 bis 3, **dadurch gekennzeichnet, dass** die Antriebsräder (14, 18) eine Rollenverzahnung aufweisen.

5. Umlaufförderer nach einem der Ansprüche 1 bis 4, **dadurch gekennzeichnet, dass** zur Umlenkung der Zugmittel (12, 16) im nicht angetriebenen Bereich jeweils Umlenkräder (14, 18) vorhanden sind, wobei jedes Zugmittel (12, 16) über zwei seitlich beabstandete Antriebräder (14, 18) und zwei seitlich beabstandete Umlenkräder (14, 18) läuft.

## Claims

1. Endless conveyor with a first positive traction mechanism (12), in particular a chain or toothed belt, running vertically in the main direction over top and bottom driving pulleys (14) and deflecting pulleys (14), wherein individual members (22) of the traction mechanism (12) are coupled to carrying forks (28) for loads, wherein a second circulating positive traction mechanism (16) is disposed after the first traction mechanism (12) at the same level as the first traction mechanism (12) yet laterally staggered with respect to the first traction mechanism (12), that the carrying forks (28) are rotatably mounted via shafts (26) in members (22) of the first traction mechanism (12), reach through the shafts (26) of these members (22) and are also mounted by means of a horizontal lever (36) and a pin (38) in members (24) of the second traction mechanism (16), and that both traction mechanisms (12, 16) circulate in synchronism, **characterised in that** the shafts (26) of the carrying forks (28) are additionally mounted in fork carriages (32) which slide in a circulating guide rail (30) disposed before the first traction mechanism (12), wherein the course of the guide rail (30) corresponds to the course of the first traction mechanism (12).

2. Endless conveyor according to Claim 1, **characterised in that** the traction mechanisms (12, 14) are formed as rubber pulley block belts, in which a traction support comprises a driving tooth system on the side running over the driving pulleys (14, 18), and members (22; 24) for holding the shafts (26) and pins (38) of the carrying forks (28) on the opposite side.

3. Endless conveyor according to Claim 1, **characterised in that** the traction mechanisms (12, 16) consist as a chain of a corrosion-resistant steel.

4. Endless conveyor according to any one of Claims 1 to 3, **characterised in that** the driving pulleys (14, 18) comprise a roller-type tooth system.

5. Endless conveyor according to any one of Claims 1 to 4, **characterised in that** respective deflecting pulleys (14, 18) are provided to deflect the traction mechanisms (12, 16) in the non-driven region, wherein each traction mechanism (12, 16) runs over two laterally spaced driving pulleys (14, 18) and two laterally spaced deflecting pulleys (14, 18).

## Revendications

1. Convoyeur sans fin avec un premier moyen de traction mécanique passant verticalement dans la direction principale sur des roues motrices supérieure et inférieure (14) et des roues de renvoi (14), en particulier une chaîne ou une courroie dentée, des éléments individuels (22) du moyen de traction (12) étant couplés à des fourches (28) pour des charges, un second moyen de traction mécanique (16) tournant étant disposé derrière le premier moyen de traction (12) au même niveau de hauteur de celui-ci, mais décalé latéralement par rapport au premier moyen de traction (12), que les fourches (28) sont logées rotatives dans des éléments (22) du premier moyen de traction (12) par l'intermédiaire d'axes (26) qui traversent lesdits éléments (22) et qui sont logés également dans des éléments (24) du second moyen de traction (16) au moyen d'un levier horizontal (36) et d'une cheville (38) et que les deux moyens de traction (12, 16) tournent de manière synchrone, **caractérisé en ce que** les axes (26) des fourches (28) sont logés, en plus, dans des chariots à fourche (32) qui glissent dans un rail de guidage tournant (30) disposé devant le premier moyen de traction (12), la trajectoire du rail de guidage (30) correspondant à la trajectoire du premier moyen de traction (12).

2. Convoyeur sans fin suivant la revendication 1, **caractérisé en ce que** les moyens de traction (12, 14) sont des courroies en caoutchouc plein, un support des moyens de traction présentant une denture d'entraînement sur la face passant sur les roues motrices (14, 18) et sur la face opposée, des éléments (22, 24) destinés à recevoir les axes (26) et les chevilles 38 des fourches (28).

3. Convoyeur sans fin suivant la revendication 1, **caractérisé en ce que** les moyens de traction (12, 16) sont conçus sous forme de chaîne en acier résistant à la corrosion.

4. Convoyeur sans fin suivant une des revendications 1 à 3, **caractérisé en ce que** les roues motrices (14, 18) présentent une denture.

5. Convoyeur sans fin suivant une des revendications 1 à 4, **caractérisé en ce que** des roues de renvoi (14, 18) existent respectivement dans la zone non entraînée pour le renvoi des moyens de traction (12, 16), chaque moyen de traction (12, 16) passant sur deux roues motrices écartées latéralement (14, 18) et deux roues de renvoi écartées latéralement (14, 18).
